# EUROPÄISCHE PATENTANMELDUNG

(11) **EP 0 749 089 A2**
(43) Veröffentlichungstag der Anmeldung: **18.12.1996**
(21) Anmeldenummer: 96102645.7
(22) Anmeldetag: 22.02.1996
(51) Int. Cl.: G06K 15/02

(54) **Schaltung zur Übertragung von Daten auf einen Druckkopf**

(30) Priorität: 13.06.1995 DE 19521463
(71) Anmelder: Esselte Meto International GmbH, D-64646 Heppenheim (DE)
(72) Erfinder: Hagar, Gamal, D-69239 Neckarsteinach (DE)

(57) **Zusammenfassung**

Die Erfindung bezieht sich auf eine Schaltung zur Übertragung von Daten auf einen Druckkopf (1), bei der die Daten in serieller Form über eine Datenleitung (11) an einen Dateneingang (9) eines dem Druckkopf (1) zugeordneten Registers (2) übermittelt werden, und über eine Synchronisationsleitung (12) Signale an einen Takteingang (10) des Registers (2) gesendet werden, die die Übernahme der Daten vom Dateneingang (9) in das Register (2) steuern. Um Fehler bei der Datenübertragung zu vermeiden, wird vorgeschlagen, daß die Signale am Takteingang (10) um einen festen Phasenwinkel gegenüber den Signalen am Dateneingang (9) in der Phase verzögert sind.

Alternativ oder zusätzlich ist empfohlen, daß ein Flipflop (16) vorhanden ist, bei dem ein Eingangszustand um ein Taktsignal verzögert an einem Ausgang (19) erscheint, der mit dem Dateneingang (9) des Registers (2) verbunden ist, und daß das Ausgangssignal eines Oszillators (5') frequenzhalbiert und an den Clock-Eingang (6) eines Parallel-Seriell-Wandlers (3) gelegt wird.

## Beschreibung

Die Erfindung bezieht sich auf eine Schaltung zur Übertragung von Daten auf einen Druckkopf gemäß der Oberbegriffe der Ansprüche 1 und 4.

Im Stande der Technik, wie er beispielsweise aus der EP-A-645 249 bekannt geworden ist, werden Druckköpfen - insbesondere Thermodruckköpfen - die auszudruckenden Daten in serieller Form übertragen. Jede auf einen Aufzeichnungsträger zu übertragende Druckzeile wird datenwortweise in serielle Form umgewandelt und über eine Datenleitung, d.h. ein Kabel, von der Hauptplatine des Druckers auf den Dateneingang eines direkt am Thermodruckkopf angebrachten Registers übertragen. Nachdem eine komplette Druckzeile, also eine der Zahl der Heizelemente des Druckkopfs entsprechende Zahl von Daten in das Register eingeschrieben ist, erfolgt der eigentliche Druckvorgang; die Heizelelemente werden entsprechend den im Register gespeicherten Daten aktiviert. Zur Synchronisation der Datenübertragung dient ein zweites Kabel, die Synchronisationsleitung. Es werden genau dann einzelne Daten vom Dateneingang in das Register übernommen, wenn sich der Zustand des mit der Synchronisationsleitung verbundenen Takteingangs von Null auf Eins (oder alternativ von Eins auf Null) ändert. Die im Register enthaltenen Daten werden dabei jeweils um eine Speicherzelle weitergeschoben. Nach einer Anzahl von Synchronisationsimpulsen, die der Zahl der Speicherzellen des Registers entspricht, sind alle Speicherzellen gefüllt, der Druckvorgang wird durchgeführt.

Als nachteilig ist dabei anzusehen, daß die physikalischen Eigenschaften der Leitungen zu Datenübertragungsfehlern führen können. Da die Ausgangswiderstände konventioneller Schaltkreise wesentlich höher als die Wellenwiderstände der Leitungen sind, ist es nicht möglich, eine korrekte Anpassung der Eingangs- und Ausgangswiderstände der verwendeten Schaltungen an die Leitungen vorzunehmen. Durch die Fehlanpassung entstehen am Daten- und Takteingang des Druckkopfes unerwünschte Reflexionen, die sich durch exponentiell abklingende Schwingungen an den Umkehrpunkten der ursprünglich rechteckförmigen Signale bemerkbar machen. Es ist somit mitunter nicht mehr unterscheidbar, ob das Signal am Dateneingang nun auf Null oder Eins liegt. Die nachteilige Folge sind Fehler im Druckbild.

Die Aufgabe der vorliegenden Erfindung besteht darin, eine Schaltung gattungsgemäßer Art zu schaffen, die sich durch schnelle und fehlerarme Übertragung von auszudruckenden Daten auf den Druckkopf auszeichnet.

Im folgenden werden zwei Lösungen der Aufgabe vorgeschlagen, die separat oder gemeinsam zur Anwendung kommen können. Eine Lösung bezieht sich auf die Phasenlage der Signale am Dateneingang des Registers, während die zweite ein separates Flipflop zur Verbesserung der Kurvenform am Dateneingang vorschlägt.

Erfindungsgemäß wird die Aufgabe dadurch gelöst, daß die Signale am Takteingang um einen festen Phasenwinkel gegenüber den Signalen am Dateneingang in der Phase verzögert sind.

Der Kerngedanke besteht darin, erst dann ein Signal an den Takteingang anzulegen, wenn die durch Reflexionen bedingten, unerwünschten Schwingungen am Dateneingang abgeklungen sind. Da der Takteingang mit zeitlich verzögerten, d.h. phasenverschobenen, Signalen beaufschlagt wird, kommt die ansteigende bzw. abfallende Flanke des Synchronisationssignales erst dort an, nachdem am Dateneingang des Registers ein zeitlich konstantes, nicht mehr durch die Reflexionen beeinträchtigtes Signal anliegt, so daß keine Datenfehler mehr möglich sind.

Die Vorteile der Erfindung bestehen vornehmlich darin, daß durch Reflexionen bedingte Fehler in der Übertragung von Daten auf den Druckkopf nicht mehr zu befürchten sind. Die erfindungsgemäße Steuerschaltung ist wenig aufwendig, preiswert realisierbar und betriebssicher. Sie ermöglicht weiterhin, die Geschwindigkeit der Datenübertragung bei verminderter Fehlerrate zu vergrößern.

Im konkreten bietet sich an, die Signale des Takteingangs um etwa 90° gegenüber denen des Dateneingangs zu verzögern. Dieser Phasenwinkel entspricht einem Viertel eines Taktzyklus. Das Taktsignal kommt erst am Register des Druckkopfs an, nachdem die Amplitude der reflexionsbedingten Schwingungen am Dateneingang auf einen unkritischen Wert abgefallen sind.

Die Erfindung kann in an sich bekannter Weise mittels eines Parallel-Seriell-Wandlers realisiert werden. Letzterer wird von einem Mikroprozessor über einen Datenbus datenwortweise mit den auszudruckenden Daten beaufschlagt. An einem Clock-Eingang des Wandlers liegt ein rechteckförmiges Synchronisationssignal an, das die serielle Übertragung der Daten - über die Datenleitung - zum Druckkopf steuert. Das Synchronisationssignal wird weiterhin in der Phase verschoben und auf den Takteingang des Druckkopfs gelegt. Die Phasenverschiebung kann auf der Hauptplatine des Druckers oder direkt am Druckkopf geschehen und beispielsweise durch einen Tiefpaß (RC-Glied) erfolgen.

Alternativ oder zusätzlich zu den bisher beschriebenen Maßnahmen kann die Fehlerrate der Datenübertragung bei einer Schaltung zur Übertragung von Daten auf einen Druckkopf, bei der die Daten mittels eines Parallel-Seriell-Wandlers in serielle Form gebracht und über eine Datenleitung an einen Dateneingang eines dem Druckkopf zugeordneten Registers übermittelt werden, wobei ein Synchronisationssignal an einen Clock-Eingang des Parallel-Seriell-Wandlers angelegt wird, dadurch verbessert werden, daß ein Flipflop vorhanden ist, bei dem ein Eingangszustand um ein Taktsignal verzögert an einem Ausgang erscheint, daß der Ausgang des Flipflops mit dem Dateneingang des Registers verbunden ist, daß ein Dateneingang des Flipflops am Ausgang des Parallel-Seriell-Wandlers angeschlossen ist, daß das Ausgangssignal eines Oszillators frequenzhalbiert und an den Clock-Eingang des Parallel-Seriell-Wandlers gelegt wird, und daß das Ausgangssignal des Oszillators über einen Phasenschieber auf einen Takteingang des Flipflops übertragen wird.

Es kommt ein sogenanntes D-Flipflop, bei dem der jeweilige Eingangszustand um ein Taktsignal verzögert am Ausgang erscheint, zum Einsatz. Der Ausgang des Flipflops wird mit dem Dateneingang des Registers des Druckkopfes verbunden, während der Dateneingang des Flipflops am Ausgang des Parallel-Seriell-Wandlers angeschlossen ist. Der Takteingang des Flipflops und der Clock-Eingang des Wandlers wird durch einen Oszillator gesteuert, der in einem Mikroprozessor - der in der Regel die Steuerung des gesamten Druckers durchführt - enthalten sein kann. Der Oszillator ist mit dem Clock-Eingang des Wandlers durch einen Frequenzhalbierer verbunden und ebenfalls über einen Phasenschieber am Takteingang des Flipflops angeschlossen. Das am Clock-Eingang des Wandlers anliegende Synchronisationssignal weist also die halbe Frequenz des Signals am Takteingang des Flipflops auf. Die Funktion der Schaltung ist folgende: Bei einer ansteigenden Flanke am Clock-Eingang des Wandlers wird ein Datenbit (d.h. eine Spannung, die entweder Null oder Eins entspricht) an den Dateneingang des Flipflops angelegt. Entscheidend ist hier, daß am Takteingang des Flipflops ein durch den Phasenschieber zeitlich verzögerter Impuls eintrifft. Das am Ausgang des Wandlers anliegende Datenbit wird also erst nach dem Ablauf einer bestimmten Zeit in das Flipflop übernommen, so daß eventuelle, durch Fehlanpassungen bedingte Schwingungen bereits abgeklungen sind. Am Ausgang des Flipflops liegt währenddessen zunächst noch das im vorhergehenden Takt übertragene Datenbit an. Erst nachdem der Takteingang des Flipflops mit einem zweiten Impuls beaufschlagt ist - da an diesem Eingang ein Signal mit der doppelten Frequenz des Synchronisationssignals anliegt, kommen dort während eines Taktes des Wandlers zwei Rechteckimpulse an - wird das Datenbit auf den Ausgang des Flipflops und den Dateneingang des Registers übertragen. Es findet hier also ebenfalls eine zeitliche Verzögerung der Übernahme der Daten statt, die zur Verringerung der Fehlerrate beiträgt.

Als Phasenschieber zwischen dem Ausgang des Oszillators und dem Eingang des Flipflops kommt außer einem Tiefpaß (RC-Glied) insbesondere ein Inverter in Frage. Die von ihm bewirkte Phasenverschiebung von 180° entspricht - wegen der Frequenzhalbierung - genau einer Verzögerung von einem Viertel der Taktzeit des Synchronisationssignals am Clock-Eingang des Parallel-Seriell-Wandlers.

Das Flipflop kann im speziellen an zwei Positionen angebracht werden. Einerseits kann es direkt am Druckkopf zum Einsatz kommen und dazu dienen, die Störungen (d.h. Reflexionen), die durch die Leitungen zwischen der Hauptplatine und dem Druckkopf entstehen, zu beseitigen. Andererseits kann es auch in der Nähe des Anschlusses der Datenleitung auf der Hauptplatine des Druckers angeordnet sein und die Reflexionen entfernen, die zwischen dem Parallel-Seriell-Wandler und dem Anschluß auftreten.

Im folgenden werden Ausführungsformen der Erfindung anhand der Zeichnungen näher erläutert. Sie zeigen in schematischer Darstellung in
- Figur 1:: eine erfindungsgemäße Schaltung;
- Figur 2:: ein Impulsdiagramm der Schaltung in Figur 1;
- Figur 3:: eine Schaltung mit einem Flipflop.

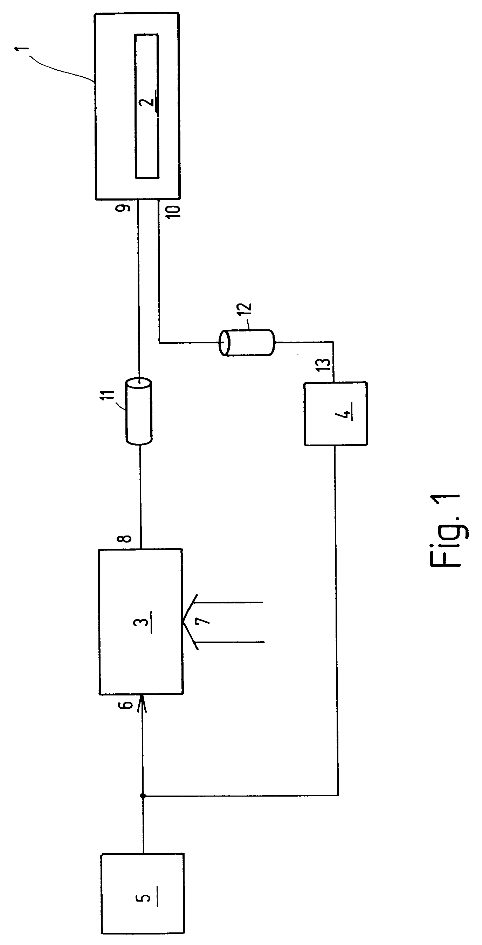

Die in Figur 1 wiedergegebene Schaltung besteht in ihrem grundsätzlichen Aufbau aus einem Mikroprozessor 5, einem Parallel-Seriell-Wandler 3 und einem Druckkopf 1. Letzterer ist im dargestellten Beispiel ein zum Bedrucken eines Aufzeichnungsträgers dienender Thermodruckkopf mit einer Reihe einzeln aktivierbarer Heizelemente, die mittels eines Registers 2 gesteuert werden. Zwischen den Heizelementen und einer Gegendruckrolle ist der Aufzeichnungsträger und - falls letzterer nicht thermisch aktivierbar ist - das wirksame Trum eines Farbbandes angeordnet, so daß ein die Heizelemente durchfließender Strom ein Schmelzen von Partikeln des Farbbandes und ihre Übertragung auf den Aufzeichnungsträger zur Folge hat. Entsprechend des von den einzelnen Elementen des Registers 2 gespeicherten Zustandes werden die Heizelemente beim Druckvorgang aktiviert. Die Versorgung des Registers 2 mit den zu druckenden Daten erfolgt durch eine Datenleitung 11, durch die die Daten in serieller Form übertragen werden. Die Daten werden im Druckkopf 1 mittels des Registers 2 jeweils einer Druckzeile entsprechend parallelisiert und dienen zur Ansteuerung der Treiberschaltungen der Heizelemente. Nachdem das gesamte Register 2 mit den entsprechenden Daten beaufschlagt ist, also eine vollständige Druckreihe auf den Druckkopf 1 übertragen wurde, übermittelt der Mikroprozessor 5 dem Druckkopf 1 ein Druckfreigabesignal, so daß die Heizelemente von elektrischem Strom durchflossen werden und eine Druckreihe auf den Aufzeichnungsträger gedruckt wird.

Die auszudruckenden Daten werden datenwortweise (z.B. mit jeweils 16 bit) über einen Bus 7 vom Mikroprozessor 5 in den Parallel-Seriell-Wandler 3 eingeschrieben. An einem Clock-Eingang 6 des Wandlers 3 liegen Taktsignale des Mikroprozessors 5 an. Bei jeder ansteigenden Flanke am Clock-Eingang 6 wird jeweils ein Bit auf einen Ausgang 8 des Wandlers 3 gelegt und über die Datenleitung 11 an einen Dateneingang 9 des Registers 2 übertragen. Außerdem werden die Taktsignale des Mikroprozessors 5 über einen Phasenschieber 4, dessen Funktion weiter unten beschrieben wird, über eine Synchronisationsleitung 12 an einen Takteingang 10 des Registers 2 weitergeleitet. Der Zustand am Dateneingang 9 wird genau dann in die erste Speicherzelle des Registers 2 übernommen, wenn am Takteingang 10 eine ansteigende Flanke anliegt. Gleichzeitig werden die Inhalte der übrigen Speicherzellen des Registers 2 um eine Stelle weitergeschoben. Das Register 2 ist somit ein Schieberegister. Nachdem ein Datenwort auf das Register 2 übertragen wurde, werden sukzessive die nachfolgenden Datenworte über den Bus 7 in den Parallel-Seriell-Wandler 3 geschrieben und durch die Datenleitung 11 seriell in das Register 2 übertragen.

Da der Ausgangswiderstand des Parallel-Seriell-Wandlers 3 und der Eingangswiderstand des Dateneingangs 9 des Registers wesentlich höher als der Wellenwiderstand der Datenleitung 11 sind, entstehen am Dateneingang 9 unerwünschte Reflexionen, die zu Übertragungsfehlern führen können. Als Abhilfe ist der Phasenschieber 4 vorgesehen, der beispielsweise als RC-Tiefpaß realisierbar ist. An seinem Ausgang 13 liegt ein Signal an, das um etwa 90° gegenüber dem Taktsignal des Mikroprozessors 5 in der Phase verzögert ist. Die Phasenverschiebung entspricht also etwa einem Viertel der Taktzeit des Taktsignals am Clock-Eingang 6 des Wandlers 3. Da am Takteingang 10 des Registers 2 ein derart verzögertes Signal anliegt, wird der Zustand des Dateneingangs 9 erst dann in das Register 2 übernommen, nachdem die durch Reflexion bedingten Schwingungen abgeklungen sind. Somit sind keine Datenfehler im Register 2 mehr zu befürchten.

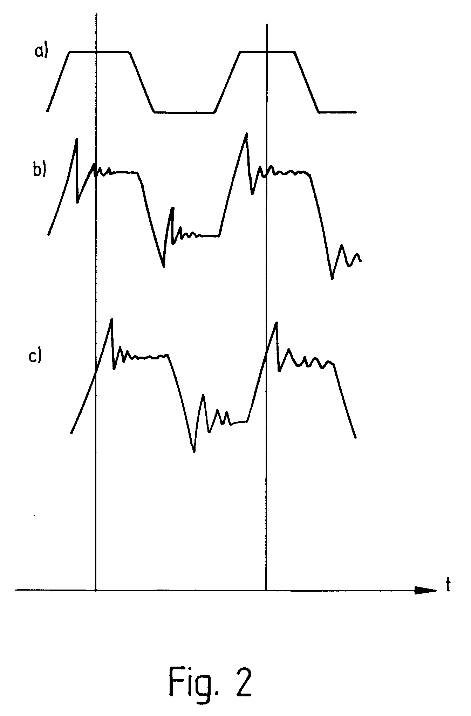

In Figur 2 sind die Verläufe der relevanten Spannungen als Funktion der Zeit illustriert. Die Kurve a) gibt den Kurvenverlauf am Ausgang 8 des Parallel-Seriell-Wandlers 3 wieder. Er ist etwa rechteckförmig mit abgeschrägten Flanken. Die in b) dargestellte Kurve entspricht dem Dateneingang 9. Aufgrund der Fehlanpassung der Eingangs- und Ausgangswiderstände des Registers 2 und des Wandlers 3 mit dem Wellenwiderstand der Datenleitung 11 entstehen an den auf- und absteigenden Flanken der Rechteckpulse überlagerte Schwingungen, die exponentiell abklingen. Nach einem Viertel der Taktzeit sind sie auf ein vernachlässigbares Maß abgesunken. Die Kurve c) stellt die Signalverläufe am Takteingang 10 des Registers 2 dar. Die Rechtecksignale sind an den Umkehrpunkten ebenfalls mit Schwingungen überlagert. An den in Figur 2 durch vertikale Linien gekennzeichneten Zeitpunkten erreicht die Spannung am Takteingang 10 einen Wert, der als Eins akzeptiert wird, woraufhin der Zustand des Dateneingangs 9 in das Register 2 übernommen wird. Aufgrund der Phasenverschiebung koinzidiert dieser Zeitpunkt mit dem Abklingen der überlagerten Schwingung am Dateneingang 9, so daß letztere keine nachteilige Auswirkung mehr haben kann.

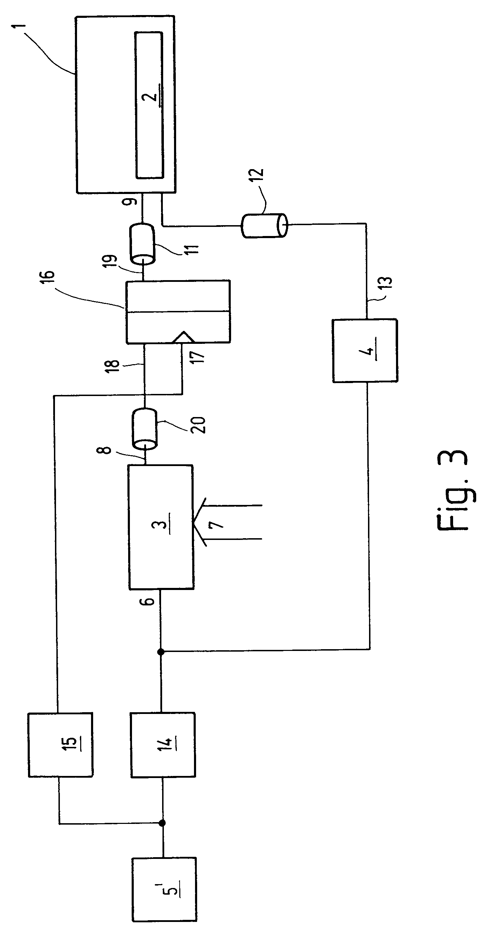

In Figur 3 findet ein D-Flipflop 16 Verwendung zur Verbesserung der Signalverläufe am Dateneingang 9. Bei diesem Flipflop 16 liegt der Zustand des Eingangs 18 um ein Taktsignal verzögert am Ausgang 19 an. Letzter ist durch die Datenleitung 11 mit dem Dateneingang 9 des Registers 2 verbunden. Der Eingang 18 des Flipflops 16 ist über eine weitere Leitung 20 am Ausgang 8 des Parallel-Seriell-Wandlers 3 angeschlossen. Außerdem ist der Taktausgang des Mikroprozessors 5' über einen Frequenzhalbierer 14 mit dem Clock-Eingang 6 des Parallel-Seriell-Wandlers 3 und dem Phasenschieber 4 verbunden, der seinerseits den Takteingang 10 speist. Die Taktfrequenz des Mikroprozessors 5' ist also bei gleicher Datenübertragungsrate in der Leitung 11 gegenüber Figur 1 verdoppelt. Außerdem ist mit dem Taktausgang des Mikroprozessors 5' ein weiterer Phasenschieber 15 verbunden, dessen Ausgang einen Takteingang 17 des Flipflops 16 speist. Die Funktion des Parallel-Seriell-Wandlers 3, des Phasenschiebers 4 und des Registers 2 entsprechen der in Figur 1 wiedergegebenen Schaltung. Das Flipflop 16 ist auf der Platine des Druckers in der Nähe des Anschlusses der Leitung 11 zum Druckkopf angeordnet; es dient dazu, die Reflexionen der Leitung 20, die zwischen dem Parallel-Seriell-Wandler 3 und dem Anschluß der Leitung 11 angeordnet ist, zu beseitigen. Es wäre alternativ denkbar, das Flipflop 16 auf dem Druckkopf 1 anzubringen, wobei die Leitung 11 entfallen würde. Seine Funktion ist wie folgt: Die durch die Leitung 20 mit unerwünschten Schwingungen überlagerten Signale des Ausgangs 8 des Parallel-Seriell-Wandlers 3 liegen am Eingang 18 des Flipflops 16 an und werden von diesem übernommen, wenn am Takteingang 17 eine ansteigende Flanke anliegt. Der Phasenschieber 15 bewirkt, daß diese Flanke gegenüber dem Taktsignal am Clock-Eingang 6 zeitlich verzögert ist und erst dann ankommt, wenn die Schwingungen bereits abgeklungen sind. Bei einem zweiten Taktimpuls am Takteingang 17 wird der Zustand des Flipflops 16 auf seinen Ausgang 19 und über die Leitung 11 auf den Dateneingang 9 des Registers 2 übertragen. Der Frequenzhalbierer 14 hat zur Folge, daß das Flipflop 16 zwei Taktimpulse erhält, während am Clock-Eingang 6 des Parallel-Seriell-Wandlers 3 nur ein Impuls anliegt. Während dieser zwei Taktimpulse übernimmt das Flipflop 16 zunächst an einem geeigneten - durch den Phasenschieber 15 determinierten - Zeitpunkt den Zustand von seinem Eingang 18 und überträgt ihm beim zweiten Taktimpuls auf das Register 2. Der Phasenschieber 15 kann im konkreten ein Inverter sein. Die Daten werden dann nach dem Ablauf eines Viertels eines Taktes des Parallel-Seriell-Wandlers 3 in das Flipflop 16 übertragen.

## Patentansprüche

1. Schaltung zur Übertragung von Daten auf einen Druckkopf (1), bei der die Daten in serieller Form über eine Datenleitung (11) an einen Dateneingang (9) eines dem Druckkopf (1) zugeordneten Registers (2) übermittelt werden, und über eine Synchronisationsleitung (12) Signale an einen Takteingang (10) des Registers (2) gesendet werden, die die Übernahme der Daten vom Dateneingang (9) in das Register (2) steuern, **dadurch gekennzeichnet,** daß die Signale am Takteingang (10) um einen festen Phasenwinkel gegenüber den Signalen am Dateneingang (9) in der Phase verzögert sind.

2. Schaltung nach Anspruch 1, **dadurch gekennzeichnet**, daß die Signale des Takteingangs (10) um etwa 90° gegenüber den Signalen des Dateneingangs (9) in der Phase verzögert sind.

3. Schaltung nach Anspruch 1 oder 2, **dadurch gekennzeichnet,** daß die Daten mittels eines Parallel-Seriell-Wandlers (3) in serielle Form gebracht und auf den Dateneingang (9) übertragen werden, daß ein Synchronisationssignal an einen Clock-Eingang (6) des Parallel-Seriell-Wandlers (3) angelegt wird, und daß das Synchronisationssignal in der Phase verschoben und auf den Takteingang (10) gelegt wird.

4. Schaltung zur Übertragung von Daten auf einen Druckkopf (1), bei der die Daten mittels eines Parallel-Seriell-Wandlers (3) in serielle Form gebracht und über eine Datenleitung (11) an einen Dateneingang (9) eines dem Druckkopf (1) zugeordneten Registers (2) übermittelt werden, wobei ein Synchronisationssignal an einen Clock-Eingang (6) des Parallel-Seriell-Wandlers (3) angelegt wird, **dadurch gekennzeichnet,** daß ein Flipflop (16) vorhanden ist, bei dem ein Eingangszustand um ein Taktsignal verzögert an einem Ausgang (19) erscheint, daß der Ausgang (19) des Flipflops (16) mit dem Dateneingang (9) des Registers (2) verbunden ist, daß ein Dateneingang (18) des Flipflops (16) am Ausgang des Parallel-Seriell-Wandlers (3) angeschlossen ist, daß das Ausgangssignal eines Oszillators (5') frequenzhalbiert und an den Clock-Eingang (6) des Parallel-Seriell-Wandlers (3) gelegt wird, und daß das Ausgangssignal des Oszillators (5') über einen Phasenschieber (15) auf einen Takteingang (17) des Flipflops (16) übertragen wird.

5. Schaltung nach Anspruch 4, **dadurch gekennzeichnet,** daß der Phasenschieber (15) ein Inverter ist.

6. Schaltung nach Anspruch 4 oder 5, **dadurch gekennzeichnet,** daß das Flipflop (16) direkt am Druckkopf (1) oder in der Nähe der Anschlüsse der Datenleitung (11) auf einer Hauptplatine eines Druckers angebracht ist.
